# EUROPEAN PATENT APPLICATION

(11) **EP 2 409 913 A1**
(43) Date of publication of application: **25.01.2012**
(21) Application number: 10007666.0
(22) Date of filing: 23.07.2010
(51) Int. Cl.: B63H 13/00, F03D 1/00, F03D 11/04

(54) **Off-shore self-aligning floating wind turbine**

(71) Applicant: Bandiera, Costantino, 16123 Genova (IT)
(72) Inventor: Bandiera, Costantino, 16123 Genova (IT)

(57) **Abstract**

"Auto-Turning Wind Turbine Floating Vessel" is a supporting floating structure of a wind turbine at operative quote above water level, that all the tower is floating on a hull with overstructures proper designed to drive the turning of the tower at bottom connected to a single turning hook anchoring system. It is an auto-equilibrated floating structure so to expose wind blades plane just perpendicular to wind direction. The thin and deep hull with high longitudinal superstructure works as aft flag driven by wind and waves.

## Description

The invention relates to "Auto-Turning Wind Driven Turbine Vessel" is to be applied as base for installation of One Off-shore Wind Turbine on deep waters.

### State of art july 2010:

### attachments

### X1

### X2

Floating wind turbines on the sea could be also hancored on deeper waters. Offshore Wind Turbines for deep waters application are usually fixed on floating platforms which have, at actual state of art are heavy, complex and expensive with stability problems during storms caused by following both factors:
- wave impacts and wind force transversaly to surfaces respectively to hull and superstructures; (ref. to attachments A and B).
- The weights-center is too high then buoyancy center and the breadth of hull is normally increased to have form stability;

The Offshore Floating Wind Turbines development was limited by the concept that the floating structure is to be in a fixed position as Wind On-Shore Applications and that the horizontal rotation plane is above the fixed column where turning gear turns the top-cofferdam for the rotation of the vertical plane of blades perpendicular to wind direction.

### The general inventive concept submitted here:

It is an auto-equilibrated floating system to expose wind blades plane just perpendicular to wind direction.

"Auto-Turning Wind Turbine Floating Vessel" is that all the tower is floating on a hull and overstructures proper designed to drive the turning of the same tower around the vertical axe and the internally protected turning gear connected to a hook at fixed chain anchoring system to the bottom of the sea.

It is anchored by single point chain system, to support horizontal forces, also reduced by this form of hull.
(normally good practice:Electric cables run along chain to the bottom and then to coast connections users troughground electric central as usual done for floating Off-Shore Application).

And possibility of autopositioning as follows.

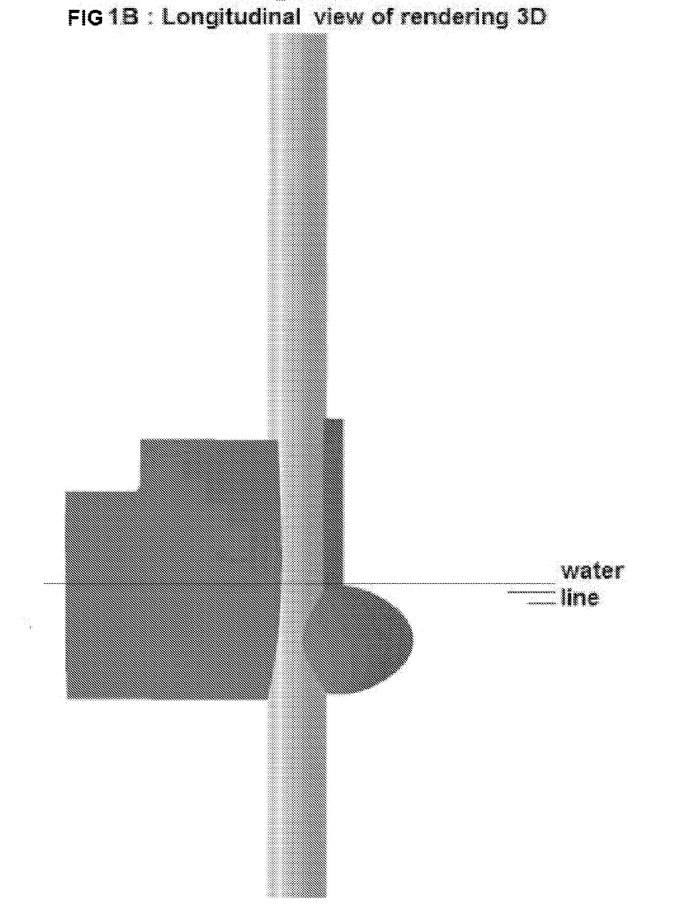

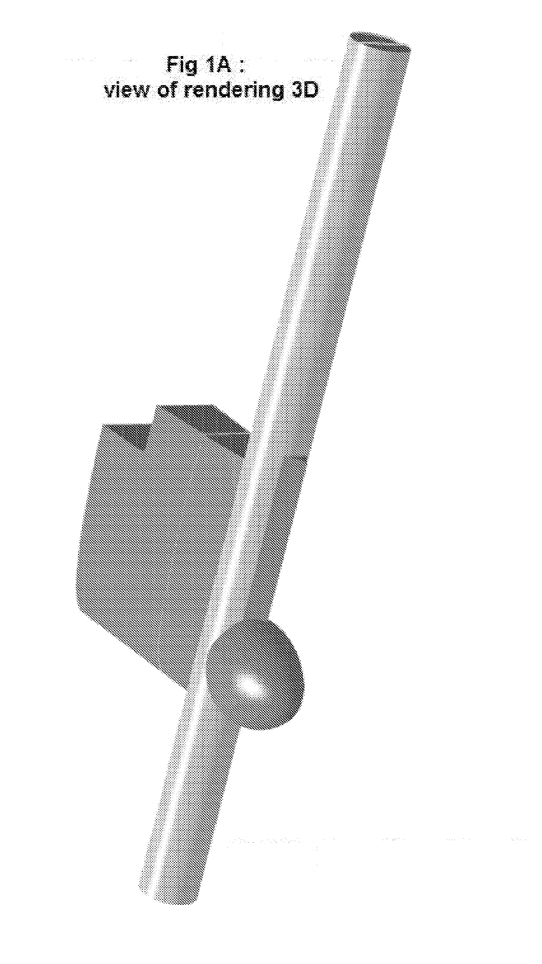

This is realized as per Fig 1A and B - Views of rendering 3D - which is a perspective view from two observation points.

Where a thin and deep hull with high longitudinal superstructure works as an "Aft Flag" driven by wind and waves giving a turning force around the main vertical axe. The weight stability is increased with the lower position of the weight center and deeper keel connected to the prolungation of the tower below water line. The right orientation of the hull perpendicular to waves and along wind direction means less resistance to sea furthermore more safety of the stability increasing.

The bow is studied with submersible bulb below water line and low angle stem above to reduce waves impact to hull and to give longitudinal stability and floating fore to tower.

An under keel propulsion aft-360°thruster is recommended for auto propulsion and to support turning from one direction to the next when sea conditions are not uniform. Stability and trim optimised by using an automated ballast piping system.

### Advantages:

The good distribution of weight is fundamental in vessel design and this is one cause of this optimization possibilities.

The top of the column is lighter in fact its turning gear wheels and electric engines should be removed.

Heavy transformers, electric boards and cables turning system whetever designed should be positioned in proper spaces inside shell below the water line.

Spaces volume is increased and usefull for access, control station, ups, electric boards and store rooms for the occasional working crew.

Reduced Maintainance trouble for best positioning of heavy machineries and easily accessibility.

The Stability of this Offshore Floating Wind Turbine Vessel is increased by weights and is of simpler construction also in series way at lower costs than the actual market. The bow forms are what to minimize sea waves inducted motions at waves speeds, with anchoring.

Stability to maintain vertical position of the floating tower, with big weight at top , mainly consisting by electric generator rotors and blades.

Simpler construction means also fast sperimentation and application.

The section of the tower should be also weight reduced to minimum as consequence of the reduced weights on its top.

Energy saving systems to use the electric consumption of the lost gears electric engines at 40%

## Claims

1. It is an auto-equilibrated system to expose wind blades plane just perpendicular to wind direction. The solution to have this advantage is any similar of Fig 1 A, 1B - Views of rendering 3D - pages 7 and 8 of 8 Hull : shell and overstructures thin/long with more depth and less breadth , with wind/waves exposed big areas in the wrong position and low resistance to waves and wind on correct position.

2. The idea that the gear rotation at sea level is an advantage than at the top of the tower. The rotation of the tower shell floating system is around the anchoring point. The fixed tower no rotating at top.

3. Internal piping/electric/cabling/automation systems for auto-functioning of The Vessel.

## Amended claims

### Amended claims in accordance with Rule 137(2) EPC.

**1.** It is the supporting floating structure of an horizontal axis wind turbine at operative quote above water level united on forward top of the vertical tower floating on the bow of a hull with overstructures proper designed to drive under wind pressure the turning of the tower at bottom connected to a turning hook anchoring system. It is an auto-equilibrated floating structure which have a leeward hull to expose wind blades plan just perpendicular to up-wind direction and to keep stable the vertical tower.

**2.** A tail hull as claimed in claim 1 **characterised in that** it is designed to reduce slamming of waves and wind resistance to the structures with also the use of a fore underwater bulb volume and of a proper acute angle bow above water level to be extended along the forward of the tower.

**3.** An arrangement in accordance with claim 1 **characterised in** a longitudinal ballast system consisting in ballast tanks distributed along the hull interconnected with piping pumps, valves which modify the longitudinal trimming of the hull and so the verticallity of the united tower.

**4.** An arrangement in accordance with claim 1 **characterised in** an auxiliary aft thruster with a marine propeller which is for moving and helping the operative turning of the floating hull structure around the vertical tower anchorage.

**5.** An arrangement in accordance with claim 1 **characterised in** the part of the automatic control system so to command auxiliary systems of ballast system in accordance with claim 3 to correct the longitudinal trim of the claimed hull maintaining the tower in vertical position and in accordance with claim 4 to help the turning of tower driving the blades rotor to upwind position, under variable conditions of wind and sea.

**6.** An arrangement in accordance with claim 1 **characterised in** a tube guide for cable passage to across the bottom side of the tower connected along the vertical chain anchoring system to the bottom of the sea. It consisting of a vertical open pipe with the lower side to seabed and the upper inside tower above waterline. It should be considered a simple protection guide for the passage of cables .
